# EUROPEAN PATENT APPLICATION

(11) **EP 4 512 519 A2**
(43) Date of publication of application: **26.02.2025**
(21) Application number: 24188829.6
(22) Date of filing: 16.07.2024
(51) Int. Cl.: B01J 13/00

(54) **INSULATION COMPOSITION FOR BATTERY DEVICE, METHOD FOR PREPARING THE INSULATION COMPOSITION, SHEET FORMED USING THE INSULATION COMPOSITION, AND BATTERY MODULE COMPRISING THE SHEET**

(30) Priority: 27.07.2023 KR 20230098056
(71) Applicant: SAMSUNG SDI CO., LTD., Giheung-gu Yongin-si, Gyeonggi-do 17084 (KR)
(72) Inventor: Lee, Jae Hyun, 17084 Yongin-si, Gyeonggi-do (KR); Ryu, Bo Kyung, 17084 Yongin-si, Gyeonggi-do (KR); Yang, Seung Yong, 17084 Yongin-si, Gyeonggi-do (KR); Park, Hye Jin, 17084 Yongin-si, Gyeonggi-do (KR); Ra, Ha Na, 17084 Yongin-si, Gyeonggi-do (KR); Woo, Myung Heui, 17084 Yongin-si, Gyeonggi-do (KR); Kim, Sang Hoon, 17084 Yongin-si, Gyeonggi-do (KR)
(74) Representative: Gulde & Partner

(57) **Abstract**

Example embodiments include an aerogel composition for battery insulation sheets, the aerogel composition including a reinforcement material including a first fibrous support and a second fibrous support, an aerogel, a functional material including a binder, a dispersant, or a combination thereof, and a solvent, wherein the first fibrous support and the second fibrous support have different ingredients. Example embodiments also include a method of manufacturing the aerogel composition, a battery insulation sheet formed using the aerogel composition, and a method of manufacturing the battery insulation sheet.

## Description

### BACKGROUND

### 1. Field

Example embodiments relate to an aerogel composition for battery insulation sheets, a method of manufacturing the battery insulation sheets, a battery insulation sheet formed using the battery insulation sheets, and a method of manufacturing the battery insulation sheets.

### 2. Description of the Related Art

A secondary battery is or includes a power storage system that converts electrical energy into chemical energy, stores the chemical energy, and provides high energy density. Compared to a primary battery, which is typically not rechargeable, a secondary battery is rechargeable and is widely used in information technology {IT} devices such as, e.g., smartphones, cellular phones, laptop computers, tablet computers, and the like. There is an increased interest in electric vehicles to reduce or prevent environmental pollution, and a high-capacity secondary battery may be adopted in electric vehicles. The secondary battery may exhibit characteristics such as, e.g., high density, high output, and stability.

When a plurality of high-capacity cells is included, as in a lithium secondary battery, one cell may overheat and may go into thermal runaway for various reasons, which may adversely affect other cells adjacent thereto, and therefore it may be desirable to thermally isolate neighboring cells from each other.

Conventionally, a plate or an insulating resin sheet is disposed between cells to isolate and insulate neighboring cells from each other.

### SUMMARY

The invention is defined by the appended claims.

Example embodiments include an aerogel composition having excellent, desired, advantageous or improved thermal insulation, fire resistance, mechanical properties, and dustiness, a method of manufacturing the aerogel composition, a battery insulation sheet formed using the aerogel composition, and a method of manufacturing the aerogel composition.

An example embodiment includes an aerogel composition for battery insulation sheets, the aerogel composition including a reinforcement material including a first fibrous support and a second fibrous support, an aerogel, a functional material including a binder, a dispersant, or a combination thereof, and a solvent. The first fibrous support and the second fibrous support have different ingredients.

Each, or at least one, of the first fibrous support and the second fibrous support may be made of or include at least one of glass, silica, rock, basalt, alumina, silicon carbide, boron, ceramic, and quartz. Each, or at least one, of the first fibrous support and the second fibrous support may be in the form of at least one of powder, wool, chop, felt, batting, and lofty batting.

The first fibrous support may be or include silica fiber, and the second fibrous support may be or include glass wool or silica wool.

The first fibrous support and the second fibrous support may be included in a weight ratio of about 1:5 to 5:1.

Each, or at least one, of the first fibrous support and the second fibrous support may have an average length of about 50 µm to 20,000 µm and an average diameter of about 0.1 µm to 30 µm. For example, the average length may be about 100 µm to 12,000 µm, about 100 µm to 5,000 µm, or about 3,000 µm to 12,000 µm. For example, the average diameter may be about 8 µm to 20 µm, about 8 µm to 12 µm, or about 10 µm to 20 µm.

The aerogel may have a Brunauer, Emmett and Teller {BET} specific surface area of about 500 m²/g to 1,000 m²/g.

The aerogel may have an average particle size D50 of about 5 µm to 200 µm.

The binder may include an aqueous polymer binder, and the aqueous polymer binder may be or include at least one of a water-based polymer, an anionic water-soluble polymer, a cationic water-soluble polymer, and a water-dispersible polymer.

The binder may be included so as to account for about 0.5 wt% to 20 wt% based on the total amount of solids in the aerogel composition.

The dispersant may be or include at least one of a surfactant and a phosphate-based salt.

The dispersant may be included so as to account for about 0.1 wt% to 6 wt% based on the total amount of solids in the aerogel composition.

The solvent may be at least one of a polar solvent and a non-polar solvent.

The weight ratio of the solvent to the total amount of solids in the aerogel composition may be about 1:1 to 1:90.

The reinforcement material may be included so as to account for about 5 wt% to 70 wt%, the aerogel may be included so as to account for about 10 wt% to 90 wt%, and the functional material may be included so as to account for about 0.5 wt% to 20 wt%, based on the total amount of solids in the aerogel composition.

Another example embodiment includes a method of manufacturing an aerogel composition for battery insulation sheets, the method including mixing a solvent with a functional material including a binder, a dispersant, or a combination thereof to manufacture a solvent mixture, mixing the solvent mixture with an aerogel to manufacture an aerogel mixture, and mixing the aerogel mixture with a reinforcement material to manufacture an aerogel composition, wherein the reinforcement material includes a first fibrous support and a second fibrous support, and the first fibrous support and the second fibrous support have different ingredients. When the first fibrous support and the second fibrous support have different ingredients, some of the ingredients may be the same but some ingredients may be different, or the ingredients in both fibrous support may be totally different. For example, the first fibrous support and the second fibrous support may include at least one ingredient that is different for the other.

Another example embodiment includes a battery insulation sheet including a first substrate, a second substrate, and an aerogel layer formed between the first substrate and the second substrate, wherein the aerogel layer is formed using the aerogel composition.

Each, or at least one, of the first substrate and the second substrate may include a resin, a metal, an inorganic material other than the metal, or a composite thereof.

Each, or at least one, of the first fibrous support and the second fibrous support in the aerogel layer may have a vertical orientation, a horizontal orientation, or a combination thereof.

A further example embodiment includes a method of manufacturing a battery insulation sheet, the method including applying the aerogel composition to a first substrate and laminating a second substrate on the applied aerogel composition to manufacture a laminate.

The method may further include pressing and drying the laminate after manufacturing the laminate.

### BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a schematic view showing the structure of a battery insulation sheet according to an example embodiment;
FIG. 2 is a schematic view showing the battery insulation sheet according to the example embodiment formed between a plurality of cells;
FIG. 3 is an SEM image of an aerogel layer of a battery insulation sheet according to Example 1;
FIG. 4 is an SEM image of an aerogel layer of a battery insulation sheet according to Example 4;
FIG. 5 is an SEM image of an aerogel layer of a battery insulation sheet according to Example 7;
FIG. 6 is an SEM image of an aerogel layer of a battery insulation sheet according to Comparative Example 1; and

### DETAILED DESCRIPTION OF EXEMPLARY EMBODIMENTS

Hereinafter, example embodiments will be described in detail such that a person having ordinary skill in the art can readily implement the example embodiments. However, example embodiments may be implemented in different forms and are not limited to the example embodiments described herein.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The embodiments of the present disclosure are combinable. For example, a feature that is described with respect to only one embodiment may also be provided for another embodiment. Further, an embodiment may also include less features, or other features, than described. That is, not all the features of an embodiment need necessarily be present.

An insulating material, which is a material that hinders or prevents heat from flowing from higher to lower temperatures, is used not only in refrigerators, cold storages, and buildings, but also in a variety of other industries, including the aircraft, electronics, and automotive industries.

The insulating material may have excellent, desired, advantageous or improved thermal insulation performance through low thermal conductivity and mechanical strength to maintain thermal insulation performance over time.

An aerogel, which may be a transparent or translucent advanced material having a nanoporous structure, exhibits substantially low density and low thermal conductivity, and therefore the aerogel has a high potential as an insulating material, and may be considered to be a highly efficient super-insulating material that can be used in a variety of industrial applications.

An advantage of the aerogel is that the aerogel has lower thermal conductivity than conventional organic insulating materials such as, e.g., Styrofoam, and that the aerogel is capable of solving critical weaknesses of organic insulating materials, such as, e.g., fire vulnerability and generation of harmful gases in the event of fire.

Generally, however, the aerogel may be brittle, readily breaking upon slight impact, and challenging to process into low thicknesses and shapes, making it challenging to manufacture an insulation material using the aerogel alone despite excellent, desired, advantageous or improved thermal insulation.

An aerogel composition according to an example embodiment includes a reinforcement material including a first fibrous support and a second fibrous support, an aerogel, a functional material including a binder, a dispersant, or a combination thereof, and a solvent, wherein the first fibrous support and the second fibrous support have different ingredients.

A battery insulation sheet manufactured using the aerogel composition including the above components may have excellent, desired, advantageous or improved thermal insulation, fire resistance, and mechanical properties, low manufacturing process cost, and may also reduce or prevent the generation of dust from the aerogel during a manufacturing process and in actual use, thereby improving the safety of a battery.

In an example embodiment, the reinforcement material may include a first fibrous support and a second fibrous support having different ingredients, whereby the mechanical properties of a battery insulation sheet formed using the reinforcement material may be improved.

Each, or at least one, of the first fibrous support and the second fibrous support may include fiber used as a support for ordinary insulating materials. Hereinafter, the fibrous support may refer to each of the first fibrous support and the second fibrous support without reference to "first" or "second."

The fibrous support may be or include at least one of natural fiber, silica fiber, glass fiber, ceramic fiber, carbon fiber, graphite fiber, mineral fiber, and polymer fiber.

The natural fiber may be or include at least one of, for example, hemp, jute, flax, coir, Kenaf, and cellulose.

The ceramic fiber may be or include at least one of silicon carbide, silicon nitride, boron nitride, and aluminum silicon carbide.

The mineral fiber may be or include at least one of, for example, basalt, diatomite, alumina, boron, quartz, silica, slag, and rock.

The polymer fiber may be or include at least one of, for example, nylon, polyimide, polyamide, polybenzimidazole, polybenzoxazole, polyamideimide, polyethylene terephthalate, polybutylene terephthalate, polyester, polyethylene (PE), and polypropylene (PP). As an example, the polymer fiber may include at least one of, without being limited to, polyimide, polyamide, and polybenzimidazole.

The fibrous support may be in the form of at least one of, for example, without being limited to, powder, wool, chop, felt, batting, and lofty batting.

Each, or at least one, of the first fibrous support and the second fibrous support may be made of or include at least one of glass, silica, rock, basalt, alumina, silicon carbide, boron, ceramic, and quartz. Each, or at least one, of the first fibrous support and the second fibrous support may be in the form of at least one of powder, wool, chop, felt, batting, and lofty batting. As an example, the first fibrous support may be or include silica fiber or glass chop strand, and the second fibrous support may be or include glass wool or silica wool. As another example, the first fibrous support may be or include silica fiber, and the second fibrous support may be or include glass wool or silica wool. When a first fibrous support and a second fibrous support of different types are included, as described above, the mechanical properties of the battery insulation sheet may be further improved.

The first fibrous support and the second fibrous support may be included in a weight ratio of about 1:5 to 5:1, about 1:4 to 4:1, or about 1:3 to 3:1. When the first fibrous support and the second fibrous support are included in a weight ratio within any of the above ranges, the mechanical properties of the battery insulation sheet may be further improved.

The average length of the fibrous support may be, for example, about 50 µm to 20,000 µm, about 100 µm to 12,000 µm, about 100 µm to 5,000 µm, or about 3,000 µm to 12,000 µm. The average length of the fibrous support may refer to the average length of each of the first fibrous support and the second fibrous support. By including a fibrous support having an average length within any of the above ranges, the aerogel layer may be securely formed, and mechanical properties thereof may be improved.

The average diameter of the fibrous support may be, for example, about 0.1 µm to 30 µm, about 8 µm to 20 µm, about 8 µm to 12 µm, or about 10 µm to 20 µm. The average diameter of the fibrous support may refer to the average diameter of each of the first fibrous support and the second fibrous support. By including a fibrous support having an average diameter within any of the above ranges, the structure of the aerogel layer may be secured, and the manufacturing cost may be reduced.

The first fibrous support may have an average diameter of about 8 µm to 12 µm and an average length of about 100 µm to 20,000 µm, and the second fibrous support may have an average diameter of about 10 µm to 20 µm and an average length of about 3 µm to 12 µm. By including a first fibrous support and a second fibrous support each having an average diameter and an average length within the above ranges, porosity and orientation may be improved, whereby compressibility may be improved.

The content of the reinforcement material may be about 5 wt% to 70 wt%, about 25 wt% to 60 wt%, or about 30 wt% to 50 wt%, based on the total amount of solids in the aerogel composition. When a battery insulation sheet is manufactured using the aerogel composition including the fibrous support within the above ranges, the mechanical properties of the battery insulation sheet may be improved.

In an example embodiment, the aerogel may have a BET specific surface area of about 500 m²/g to 1,000 m²/g. For example, the aerogel may have a BET specific surface area of about 500 m²/g to 950 m²/g, about 550 m²/g to 950 m²/g, or about 600 m²/g to 900 m²/g. Because the aerogel having the BET specific surface area value within the above ranges is included, it is possible to provide an insulation sheet capable of effectively reducing or preventing heat transfer and heat propagation between a plurality of cells.

The average particle size D50 of the aerogel may be about 5 µm to 200 µm, about 10 µm to 100 µm, or about 20 µm to 50 µm. Because the aerogel having the average particle size within the above range is included, thermal insulation may be improved, whereby heat transfer between the plurality of cells may be delayed.

The average particle size D50 may be measured, for example, using a laser diffraction method or scanning electron microscopy (SEM), wherein the average particle size D50 of particles may be defined as the particle size at 50% of the particle size distribution (the particle size corresponding to cumulative 50% of the volume of the particle size distribution).

The content of the aerogel may be about 10 wt% to 90 wt%, about 30 wt% to 70 wt%, or about 40 wt% to 60 wt%, based on the total amount of solids in the aerogel composition. When a battery insulation sheet is manufactured using the aerogel composition including the aerogel within the above ranges, thermal insulation of the battery insulation sheet may be improved.

In an example embodiment, the binder may include an aqueous polymer binder. For example, the aqueous polymer binder may be or include at least one of a water-based polymer, an anionic water-soluble polymer, a cationic water-soluble polymer, and a water-dispersible polymer.

The water-based polymer may be or include at least one of, for example, without being limited to, polyvinyl alcohol, polyethylene oxide, polyacrylamide, and polyvinylpyrrolidone.

The anionic water-soluble polymer may include at least one of carboxylic acid, sulfonic acid, sulfuric acid ester, phosphoric acid ester, and a polymer having functional groups of salts thereof. For example, the anionic water-soluble polymer may be or include a polymer having a carboxylic acid group, and may include, without being limited to, polymaleic acid as an example.

The cationic water-soluble polymer may include at least one of amine, ammonium, phosphonium, sulfonium, and a polymer having functional groups of salts thereof. For example, the cationic water-soluble polymer may be a polymer having an amine group, and may be at least one of, without being limited to, polyethylene amine and polyamine as an example.

The water-dispersible polymer may be, without being limited to, at least one of water-dispersible polyurethane and water-dispersible polyester.

The binder may include at least one of a water-based polymer and a water-dispersible polymer. For example, the binder may include a water-based polymer having binder properties and dispersing properties, and water-dispersible polyurethane having fire-resistant properties. As an example, the binder may include polyvinyl alcohol and water-dispersible polyurethane.

The weight ratio of the water-based polymer to the water-dispersible polymer may be about 1:1 to 1:5, about 1:1 to 1:4, or about 1:2 to 1:3. When the weight ratio of the water-based polymer to the water-dispersible polymer is within the above ranges, fire resistance and mechanical properties of the insulation sheet may be further improved in addition to the thermal insulation, dustiness, and compressibility of the insulation sheet.

The content of the binder may be about 0.5 wt% to 20 wt%, about 2 wt% to 15 wt%, or about 8 wt% to 15 wt%, based on the total amount of solids in the aerogel composition. When a battery insulation sheet is manufactured using the aerogel composition including the binder within the above range, dustiness of the battery insulation sheet may be improved.

In an example embodiment, the dispersant may be at least one of a surfactant and a phosphate-based salt. For example, the dispersant may include at least one of, without being limited to, a non-ionic surfactant, an anionic surfactant, an amphoteric surfactant, a natural surfactant such as lecithin, and phosphate.

Further inclusion of the dispersant may further improve the dispersion of the aerogel in the composition, whereby the fibrous support and the aerogel may be substantially uniformly dispersed.

The content of the dispersant may be in a range of about 0.1 wt% to 6 wt%, about 0.1 wt% to 5 wt%, or about 0.1 wt% to 3 wt%, based on the total amount of solids in the aerogel composition. When the dispersant is included within any of the above ranges, it is possible to manufacture the aerogel composition at low cost, and to manufacture a battery insulation sheet having excellent, desired, advantageous or improved thermal insulation, fire resistance, mechanical properties, and dustiness using the same.

In an example embodiment, the binder and the dispersant may be included in a weight ratio of about 1:0.001 to 1:0.67, about 1:0.001 to 1:0.5, or about 1:0.001 to 1:0.3. Mixing the binder and the dispersant in a weight ratio within any of the above ranges may result in more uniform dispersion of the aerogel in an aerogel layer.

In an example embodiment, the reinforcement material may be included so as to account for about 25 wt% to 60 wt%, the aerogel may be included so as to account for about 30 wt% to 70 wt%, and the binder may be included so as to account for about 2 wt% to 15 wt%, based on the total amount of solids in the aerogel composition.

As an example, the reinforcement material may be included so as to account for about 30 wt% to 50 wt%, the aerogel may be included so as to account for about 40 wt% to 60 wt%, and the binder may be included so as to account for about 8 wt% to 15 wt%, based on the total amount of solids in the aerogel composition. When the aerogel composition is formed within any of the above ranges, it is possible to realize excellent, desired, advantageous or improved thermal insulation and fire resistance while improving mechanical properties and to improve the binding between the reinforcement material and the aerogel, thereby reducing or preventing dust generation.

In an example embodiment, the reinforcement material may be included so as to account for about 25 wt% to 60 wt%, the aerogel may be included so as to account for about 30 wt% to 70 wt%, the binder may be included so as to account for about 2 wt% to 15 wt%, and the dispersant may be included so as to account for about 0.1 wt% to 5 wt%, based on the total amount of solids in the aerogel composition.

As an example, the reinforcement material may be included so as to account for about 30 wt% to 50 wt%, the aerogel may be included so as to account for about 40 wt% to 60 wt%, the binder may be included so as to account for about 5 wt% to 10 wt%, and the dispersant may be included so as to account for about 0.1 wt% to 3 wt%, based on the total amount of solids in the aerogel composition. When the aerogel composition is formed within any of the above ranges, dispersibility of the aerogel may be improved, and therefore it is possible to realize excellent, desired, advantageous or improved thermal insulation and fire resistance while improving mechanical properties, and to improve the binding between the reinforcement material and the aerogel, thereby reducing or preventing dust generation.

In an example embodiment, the solvent may be at least one of a polar solvent and a non-polar solvent.

The polar solvent may be water, an alcohol-based solvent, or a combination thereof.

Water may include, for example, purified water, deionized water, or a combination thereof.

The alcohol-based solvent may be at least one of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be at least one of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, however, water may not be mixed well with aerogel, which is hydrophobic. In an example embodiment, the aerogel may be dispersed evenly by controlling the design of a mixing operation, the mixing conditions, the addition of the binder and the dispersant, and the amount of the binder and the dispersant. This even dispersion of the aerogel in the composition may enable the formation of a battery insulation sheet having excellent, desired, advantageous or improved thermal insulation, fire resistance, mechanical properties, and dustiness at a thin thickness without the use of a large amount of binder.

The solvent may be included such that the weight ratio of the solvent to the total amount of solids in the aerogel composition is about 1:1 to 1:90. For example, the weight ratio of the solvent to the total amount of solids in the aerogel composition may be about 1:50 to 1:70, about 1:20 to 1:30, or about 1:2 to 1:10. By controlling the weight ratio of the solvent to the total amount of solids in the aerogel composition within the above range, the viscosity may be controlled to coat the aerogel layer.

In an example embodiment, the aerogel composition may further include a silane-based compound. The silane-based compound may be or include at least one of, for example, 3-(trimethoxysilyl)propylmethacrylate, methyltriethoxysilane, methyltrimethoxysilane, ethyltrimethoxysilane, octadecyltrimethoxysilane, ethyltriethoxysilane, and 3-glycidoxypropyltrimethoxysilane. Further inclusion of the silane-based compound may further improve dispersibility.

In an example embodiment, an additive, such as, e.g., a wetting agent, an emulsifier, a compatibilizer, a viscosity modifier, a pH modifier, a stabilizer, an antioxidant, an acid or base trapping agent, a metal inactivator, a defoamer, an antistatic agent, a thickener, an adhesion improver, a coupling agent, a flame retardant, an impact modifier, pigment, dye, a colorant, or a deodorant, may be further included.

A method of manufacturing an aerogel composition according to an example embodiment includes mixing a solvent with a functional material including a binder, a dispersant, or a combination thereof to manufacture a solvent mixture, mixing the solvent mixture with an aerogel to manufacture an aerogel mixture, and mixing the aerogel mixture with a reinforcement material to manufacture an aerogel composition, wherein the reinforcing material includes a first fibrous support and a second fibrous support, and the first fibrous support and the second fibrous support have different ingredients.

In mixing the solvent with the functional material to manufacture the solvent mixture, the solvent may be mixed with the binder or may be mixed with the binder and the dispersant. A detailed description of the solvent, the binder, and the dispersant may be similar to or the same as described above.

In mixing the solvent mixture with the aerogel to manufacture the aerogel mixture, the aerogel may be added in powder form, and a detailed description of the aerogel may be similar to or the same as described above.

In mixing the aerogel mixture with the reinforcement material to manufacture the aerogel composition, a detailed description of the first fibrous support, the second fibrous support, and the reinforcement material may be similar to or the same as described above.

In each of mixing the solvent with the functional material including the binder, the dispersant, or the combination thereof to manufacture the solvent mixture, mixing the solvent mixture with the aerogel to manufacture the aerogel mixture, and mixing the aerogel mixture with the reinforcement material to manufacture the aerogel composition, mixing may be performed using a mixer. For example, the mixer may include, without being limited to, a planetary mixer and a Thinky^{™} mixer.

As an example, the planetary mixer may be used to mix the solvent mixture with the aerogel. The use of the planetary mixer to mix the solvent mixture with the aerogel may allow the aerogel to be substantially uniformly dispersed in the solvent.

The planetary mixer may be a device that may be used to mix or stir different substances in order to produce a homogeneous mixture. The planetary mixer may include a blade capable of performing planetary motion.

In an example embodiment, the planetary mixer may include at least one of one or more planetary blades and one or more high-speed dispersing blades. As an example, the planetary mixer may include at least one planetary blade and at least one high-speed dispersing blade.

Each, or at least one, of the planetary blade and the high-speed dispersing blade may substantially continuously rotate about an axis thereof. The rotation speed may be expressed in rotations per minute (rpm).

In an example embodiment, the planetary mixer may include a first blade and a second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa^{™} blade.

The rotational speed of the first blade may be, for example, about 10 rpm to 100 rpm, about 10 rpm to 60 rpm, or about 30 rpm to 70 rpm. The rotational speed of the second blade may be, for example, about 100 rpm to 2000 rpm, about 100 rpm to 1000 rpm, about 300 rpm to 1700 rpm, or about 500 rpm to 1700 rpm.

When the functional material is added to and mixed with the solvent, the rotational speed of the first blade of the mixer may be in a range of about 10 rpm to 60 rpm, about 20 rpm to 50 rpm, or about 30 rpm to 40 rpm, and the rotational speed of the second blade may be about 300 rpm to 1700 rpm, about 600 rpm to 1000 rpm, or about 700 rpm to 800 rpm. When the solvent and the functional material are mixed with each other, as described above, the solvent mixture in which the binder, the dispersant, or the combination thereof is substantially uniformly dispersed may be manufactured to facilitate mixing of the aerogel in a subsequent operation.

When the solvent mixture and the aerogel are mixed with each other, the rotational speed of the first blade of the mixer may be about 30 rpm to 70 rpm, about 40 rpm to 70 rpm, or about 60 rpm to 70 rpm, and the rotational speed of the second blade may be about 500 rpm to 1700 rpm, about 600 rpm to 1600 rpm, or about 800 rpm to 1500 rpm. When the aerogel is added to and mixed with the solvent mixture, as described above, the aerogel may be hindered or prevented from clumping together to induce uniform dispersion.

When the aerogel mixture and the fibrous support are mixed with each other, the rotational speed of the first blade of the mixer may be about 10 rpm to 60 rpm, about 20 rpm to 50 rpm, or about 30 rpm to 40 rpm, and the rotational speed of the second blade may be about 300 rpm to 1700 rpm, about 400 rpm to 1500 rpm, or about 800 rpm to 1200 rpm. Mixing the aerogel mixture with the fibrous support as described above may remove air bubbles in the composition, control viscosity, and facilitate dispersion of the fibrous support in the evenly dispersed aerogel, such that the aerogel surrounds the periphery of the fibrous support in the composition. A binder may be present between the aerogel and the fibrous support to improve the binding of the aerogel and the fibrous support.

A battery insulation sheet according to an example embodiment includes a first substrate, a second substrate, and an aerogel layer formed between the first substrate and the second substrate, wherein the aerogel layer is formed using the aerogel composition according to the example embodiment described above.

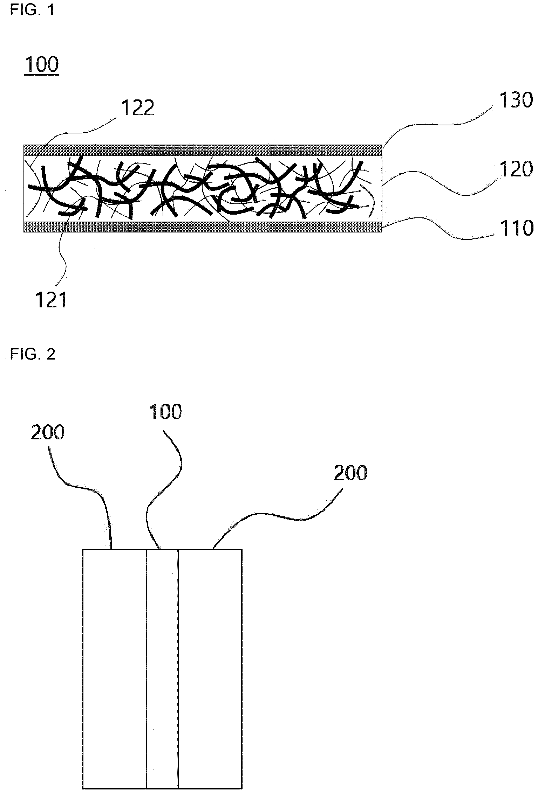

FIG. 1 is a schematic view showing the structure of a battery insulation sheet, according to an example embodiment.

Referring to FIG. 1, in an example embodiment, the battery insulation sheet 100 may have a structure including a first substrate 110, an aerogel layer 120 formed on the first substrate 110, and a second substrate 130 formed on the aerogel layer 120. In the aerogel layer 120, the first fibrous support 121 is shown as a thick line and the second fibrous support 122 is shown as a thin line. Components other than the first fibrous support 121 and the second fibrous support 122 are not shown in order to show the dispersion of the first fibrous support 121 and the second fibrous support 122 in detail, and it should not be construed that the aerogel layer does not include components other than the reinforcement material. In the aerogel layer 120, each of the first fibrous support 121 and the second fibrous support 122 may be vertically and horizontally oriented. In FIG. 1, the first substrate 110 and the second substrate 130 may be made of or include the same material or different materials.

As an aerogel layer including an aerogel composition according to an example embodiment is formed between the first substrate 110 and the second substrate 130, thermal insulation, fire resistance, and mechanical properties of the battery insulation sheet may be improved, and the aerogel may be hindered or prevented from falling off and creating dust when the battery insulation sheet is manufactured or installed in an apparatus.

FIG. 2 is a schematic view showing the battery insulation sheet according to the example embodiment formed between a plurality of cells.

Referring to FIG. 2, the battery insulation sheet 100 according to the example embodiment may be formed between a plurality of cells 200 included in a battery module. The upper surface and the lower surface of the battery insulation sheet, i.e., the first substrate 110 and the second substrate 130 of the battery insulation sheet 100 illustrated in FIG. 1, may be disposed to face cells adjacent thereto, respectively. When the battery insulation sheet 100 according to the example embodiment is formed between the plurality of cells 200, it is possible to provide a battery module capable of hindering or blocking flames in one cell in advance, thereby reducing or substantially inhibiting the propagation of the flames to the other cell with a higher level of safety, and thus reducing or substantially inhibiting the propagation of the flames in a battery pack including the battery insulation sheet.

In the battery insulation sheet, a detailed description of the aerogel composition constituting the aerogel layer may be similar to or the same as described above.

A variety of substrates, such as, without being limited to, a resin, a metal, an inorganic material other than the metal, or a composite thereof, may be used as each of the first substrate 110 and the second substrate 130. The form of the substrate may be, without being limited to, a film, a membrane, a sheet, etc.

The resin may be or include at least one of, for example, polyethylene, polypropylene, polystyrene, polyethylene terephthalate, and polyamide.

The metal may be or include at least one of, for example, copper, nickel, cobalt, iron, chromium, vanadium, palladium, ruthenium, rhodium, molybdenum, tungsten, iridium, silver, gold, and platinum. When a substrate made of or including any the above metals is used, the substrate may be subjected to anti-corrosion treatment or insulating treatment as needed.

The inorganic material may be or include at least one of calcium carbonate (CaCOs), talc, and mica.

As an example, each, or at least one, of the first substrate 110 and the second substrate 130 may include an inorganic material, and as another example, each, or at least one, of the first substrate 110 and the second substrate 130 may include mica. In this case, thermal insulation, durability, etc. of the insulation sheet may be improved.

In an example embodiment, each, or at least one, of the first fibrous support 121 and the second fibrous support 122 in the aerogel layer may have a vertical orientation, a horizontal orientation, or a combination thereof. As an example, each of the first fibrous support 121 and the second fibrous support 122 in the aerogel layer 120 may have a substantially uniform vertical orientation and a substantially uniform horizontal orientation. In this case, compressibility of the aerogel layer may be further improved to absorb pressure applied from one cell to cells adjacent thereto during degradation and expansion of the cell, thereby improving the safety of the battery.

In an example embodiment, the aerogel layer 120 may be formed so as to have a monolayer structure or a multilayer structure. When the aerogel layer 120 is formed so as to have a multilayer structure, the aerogel layer may be formed so as to have about 2 to 10 layers, about 2 to 7 layers, or about 2 to 5 layers.

A method of manufacturing a battery insulation sheet according to an example embodiment may include applying an aerogel composition according to an example embodiment to a first substrate 110 and laminating a second substrate 130 on the applied aerogel composition to form a laminate.

In the method of manufacturing the battery insulation sheet, a detailed description of the substrate and the aerogel composition may be similar to or the same as described above.

Applying the aerogel composition to the first substrate 110 and laminating the second substrate 130 on the applied aerogel composition may be performed using an ordinary method.

Applying the aerogel composition to the first substrate 110 may be performed once or repeatedly performed twice or more.

In an example embodiment, the method may further include pressing and drying the laminate after manufacturing the laminate.

The drying may be performed at a temperature of, for example, about 25 °C to 100 °C, about 45 °C to 90 °C, or about 60 °C to 85 °C. When drying is performed under the above temperature conditions, a solid aerogel layer may be formed on the first substrate 110 without a separate adhesive member or adhesive while reducing or preventing detachment between the first substrate 110 and the aerogel layer 120, and the aerogel layer 120 may be formed in a shape in which aerogel is coated around the plurality of the dispersed first fibrous support 121 and the second fibrous support 122.

According to various examples, it is possible to manufacture a battery insulation sheet without the use of a separate adhesive, or the formation of an adhesive layer, using a simple method of applying an aerogel composition according to an example embodiment to a first substrate 110, laminating a second substrate 130 on the aerogel composition to manufacture a laminate, and pressing and drying the laminate, whereby desired, advantageous or improved thermal insulation, fire resistance, mechanical properties, and dustiness may be realized even with a small thickness due to the substantially uniform dispersion of an aerogel.

Hereinafter, examples will be described. However, the following examples are intended only to illustrate or describe the disclosure and should not be construed as limiting the disclosure. Contents that are not described herein may be sufficiently technically inferred by those skilled in the art, and therefore a description thereof will be omitted.

### Manufacture of battery insulation sheet

### Example 1

### 1. Manufacture of aerogel composition

A solvent mixture was manufactured by adding polyvinyl alcohol (Sigma Aldrich), as a binder, to deionized water, as a solvent, and mixing the solvent mixture at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel mixture. An aerogel composition was manufactured by adding silica fiber (first fibrous support) and glass wool (second fibrous support), as a reinforcement material, to the aerogel mixture in a weight ratio of 1:3 and mixing the aerogel mixture at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of the reinforcement material, and 10 wt% of polyvinyl alcohol.

### 2. Manufacture of battery insulation sheet

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Example 2

A battery insulation sheet was manufactured using the same method as in Example 1 with a difference that an aerogel composition was manufactured by adding silica fiber and glass wool to an aerogel mixture in a weight ratio of 1:1 and mixing the aerogel mixture.

### Example 3

A battery insulation sheet was manufactured using the same method as in Example 1 with a difference that an aerogel composition was manufactured by adding silica fiber and glass wool to an aerogel mixture in a weight ratio of 3:1 and mixing the aerogel mixture.

### Example 4

A battery insulation sheet was manufactured using the same method as in Example 1 with a difference that an aerogel composition was manufactured by adding silica fiber and glass wool to an aerogel mixture in a weight ratio of 1:4 and mixing the aerogel mixture.

### Example 5

A battery insulation sheet was manufactured using the same method as in Example 1 with a difference that an aerogel composition was manufactured by adding silica fiber and glass wool to an aerogel mixture in a weight ratio of 4:1 and mixing the aerogel mixture.

### Example 6

A battery insulation sheet was manufactured using the same method as in Example 1 with a difference that an aerogel composition was manufactured by adding ceramic wool to an aerogel mixture instead of glass wool and mixing the aerogel mixture.

### Example 7

A battery insulation sheet was manufactured using the same method as in Example 1 with a difference that an aerogel composition was manufactured by adding glass chop strand to an aerogel mixture instead of silica fiber and mixing the same.

### Example 8

A battery insulation sheet was manufactured using the same method as in Example 1 with a difference that an aerogel composition was manufactured by adding glass chop strand, instead of silica fiber, and ceramic wool, instead of glass wool, to an aerogel mixture and mixing the same.

### Example 9

### 1. Manufacture of aerogel composition

A solvent mixture was manufactured by adding polyvinyl alcohol (Sigma Aldrich), as a binder, and a surfactant (Triton-X100, Sigma Aldrich), as a dispersant, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel mixture. An aerogel composition was manufactured by adding silica fiber and glass wool, as a reinforcement material, to the aerogel mixture in a weight ratio of 1:3 and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of the reinforcement material, 9.9 wt% of polyvinyl alcohol, and 0.1 wt% of the dispersant.

### 2. Manufacture of battery insulation sheet

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Comparative Example 1

### 1. Manufacture of aerogel composition

An aerogel composition was manufactured by adding polyvinyl alcohol (Sigma Aldrich), as a binder, and an aerogel having a BET value of 800 m²/g to deionized water, as a solvent, and mixing the same. A planetary mixer (DNTEK, PT-005) was used for mixing.

The solids content of the manufactured aerogel composition was found to be 50 wt% of the aerogel and 50 wt% of polyvinyl alcohol.

### 2. Manufacture of battery insulation sheet

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Comparative Example 2

A battery insulation sheet was manufactured using the same method as in Example 1 with a difference that silica fiber was used alone as a reinforcement material.

### Comparative Example 3

A battery insulation sheet was manufactured using the same method as in Example 1 with a difference that glass wool was used alone as a reinforcement material.

### Comparative Example 4

A battery insulation sheet was manufactured using the same method as in Example 1 with a difference that glass chop strand was used alone as a reinforcement material.

### Comparative Example 5

A battery insulation sheet was manufactured using the same method as in Example 1 with a difference that glass felt was used alone as a reinforcement material.

### Experimental Examples

### Experimental Example 1: SEM analysis

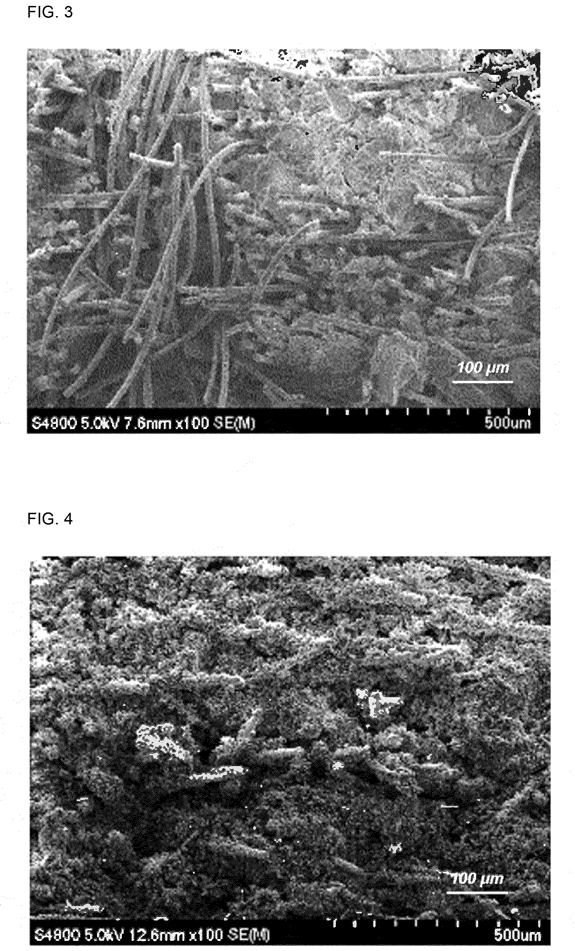

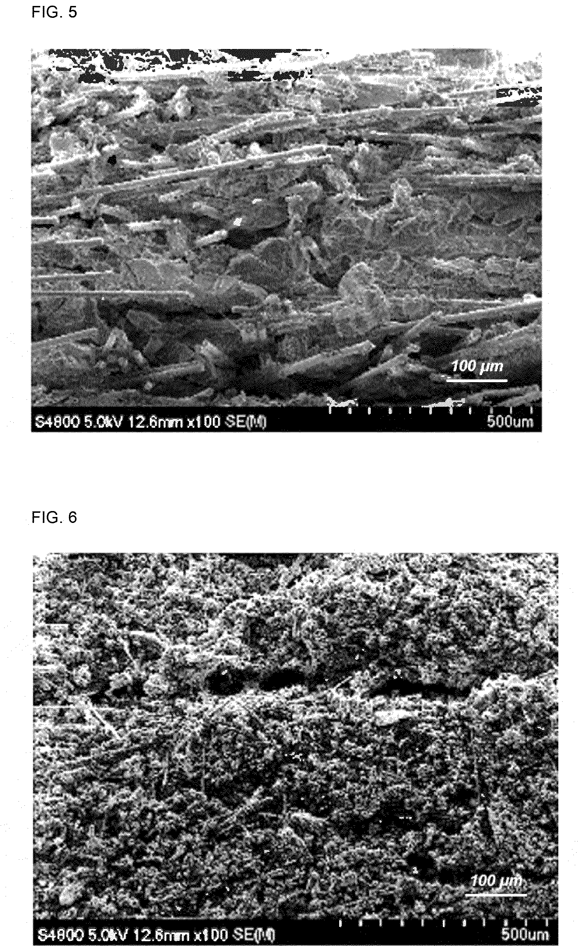

The section of the aerogel layer of each of the battery insulation sheets of Examples 1, 4, and 7 and Comparative Example 1 was observed using a Hitachi S-4800 Scanning Electron Microscope (SEM), and the results are shown in FIGS. 3 to 6. FIG. 3 is an SEM image of the battery insulation sheet according to Example 1, FIG. 4 is an SEM image of the battery insulation sheet according to Example 4, FIG. 5 is an SEM image of the battery insulation sheet according to Example 7, and FIG. 6 is an SEM image of the battery insulation sheet according to Comparative Example 1.

In Comparative Example 1, no reinforcement material is present, and it can be seen from Examples 1, 4, and 7, in which carbon fiber and glass wool are used in combination, that the horizontal orientation and the vertical orientation of the reinforcement material are substantially uniform.

### Experimental Example 2: Evaluation of compressibility

Compressibility of each of the insulation sheets manufactured in Examples 1 to 9 and Comparative Examples 1 to 5 was evaluated.

After a zero point was adjusted, each insulation sheet was inserted between aluminum plates each having a thickness of 1 mm and compressed at a compression speed of 0.02 mm/second from 0 kN to 80 kN to measure a change in thickness of the insulation sheet using a Universal Testing Machine (UTM). In this way, a compression test was performed, and the ratio of the thickness at 40 kN to the thickness at 5 kN was expressed as a compression rate. The results are shown in Table 1 below.

### Experimental Example 3: Evaluation of thermal insulation

Thermal insulation of each of the insulation sheets manufactured in Examples 1 to 9 and Comparative Examples 1 to 5 was evaluated.

Each insulation sheet was put between a pair of opposing 1 mm thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the temperature of the lower plate of the heat press in 11 minutes was measured. The results are shown in Table 1 below.

**[Table 1]**

| | Compression rate (%) | Lower plate temperature (°C) |
|---|---|---|
| Example 1 | 58.8 | 73.4 |
| Example 2 | 51.4 | 78.1 |
| Example 3 | 46.2 | 82.4 |
| Example 4 | 52.5 | 73.2 |
| Example 5 | 45.5 | 85.9 |
| Example 6 | 53.7 | 69.4 |
| Example 7 | 46.7 | 78.1 |
| Example 8 | 43.4 | 71.2 |
| Example 9 | 59.2 | 73.6 |
| Comparative Example 1 | 51.2 | 73.2 |
| Comparative Example 2 | 43.2 | 86.1 |
| Comparative Example 3 | 48.8 | 73.5 |
| Comparative Example 4 | 43.8 | 78.8 |
| Comparative Example 5 | 44.2 | 83.6 |

Referring to Table 1, it can be seen that Examples exhibit excellent, desired, advantageous or improved compression properties due to porosity and orientation improvement as the result of the first fibrous support and the second fibrous support being included in a certain ratio.

Referring to Examples 1 to 5, the results of the evaluation of the compression properties depending on the content ratio of the first fibrous support such as, e.g., the first fibrous support 121 illustrated in FIG. 1, and the second fibrous support such as, e.g., the second fibrous support 122 illustrated in FIG. 1, are shown, and it can be seen therefrom that better physical properties are achieved when the first fibrous support and the second fibrous support are included in a weight ratio of 1:1 to 1:4, especially 1:3 to 1:4.

Referring to Examples 1 and 6 to 8, the results of the evaluation of the compression properties depending on a combination of the first fibrous support and the second fibrous support are shown, and it can be seen therefrom that better compression properties are achieved when the first fibrous support is silica fiber and the second fibrous support is glass wool or ceramic wool.

It can be seen from Example 9 that the compression properties are further improved when the binder and the dispersant are mixed to manufacture the aerogel composition.

It can be seen from Comparative Example 1 that the compression rate is relatively high because no reinforcement material is included, but the insulation sheet structurally collapses due to the lack of the fibrous support therein, and it can be seen from Comparative Examples 2 to 5 that the compressive properties are lower than in Examples when a reinforcement material including one fibrous support is used.

Regarding thermal insulation, it can be seen from Examples that there is no difference in the temperature of the lower plate as a result of using different reinforcement materials, which may mean that the combination of different reinforcement materials improves the compression rate, which is a mechanical property, while not affecting the thermal insulation.

It was found that, when the content of the first fibrous support is increased beyond a certain ratio, the content of the relatively long fibrous support is increased, whereby contact thermal conductivity between the inner supports is increased, and therefore thermal insulation may be somewhat reduced.

However, it can be seen from Example 1 that the thermal insulation is equal or better despite the use of different fibrous supports compared to Comparative Examples 2 to 5, in which a single fibrous support is used.

It can be seen from Example 6, in which silica fiber is used as a first fibrous support to improve the mechanical compressibility and ceramic wool is used as a second fibrous support having good heat resistance, thermal insulation is significantly improved.

Consequently, it can be seen that excellent, desired, advantageous or improved physical properties are achieved when the first fibrous support and the second fibrous support are included in a weight ratio of 1:3 to 1:4 and when a fibrous support having good thermal insulation is mixed.

As is apparent from the above description, a battery insulation sheet manufactured using an aerogel composition according to an example embodiment may have excellent, desired, advantageous or improved thermal insulation, fire resistance, and mechanical properties, such as durability and compressibility, may have low manufacturing process cost, and may reduce or prevent generation of dust from the aerogel during a manufacturing process and in actual use.

While the foregoing describes example embodiments, the disclosure is not limited thereto, and it is contemplated that various modifications may be made within the scope of the claims, the detailed description of example embodiments, and the accompanying drawings, which also fall within the scope of the disclosure.

## Claims

1. An aerogel composition for battery insulation sheets, the aerogel composition comprising:
a reinforcement material including a first fibrous support (121) and a second fibrous support (122);
an aerogel;
a functional material including at least one of a binder and a dispersant; and
a solvent, wherein
the first fibrous support (121) and the second fibrous support (122) include ingredients that are different from each other.

2. The aerogel composition as claimed in claim 1, wherein
at least one of the first fibrous support (121) and the second fibrous support (122) includes at least one of glass, silica, rock, basalt, alumina, silicon carbide, boron, ceramic, and quartz, and
at least one of the first fibrous support (121) and the second fibrous support (122) is in a form of at least one of powder, wool, chop, felt, batting, and lofty batting.

3. The aerogel composition as claimed in claim 1, wherein
the first fibrous support (121) includes silica fiber, and
the second fibrous support (122) includes glass wool or silica wool.

4. The aerogel composition as claimed in any one of the preceding claims, wherein the first fibrous support (121) and the second fibrous support (122) are included in a weight ratio in a range of about 1:5 to 5:1.

5. The aerogel composition as claimed in any one of the preceding claims, wherein at least one of the first fibrous support (121) and the second fibrous support (122) has an average length in a range of about 50 µm to 20,000 µm and an average diameter in a range of about 0.1 µm to 30 µm.

6. The aerogel composition as claimed in any one of the preceding claims, wherein the aerogel has a BET specific surface area in a range of about 500 m²/g to 1,000 m²/g.

7. The aerogel composition as claimed in any one of the preceding claims, wherein the aerogel has an average particle size D50 in a range of about 5 µm to 200 µm.

8. The aerogel composition as claimed in any one of the preceding claims, wherein
the binder comprises an aqueous polymer binder, and
the aqueous polymer binder includes at least one of a water-based polymer, an anionic water-soluble polymer, a cationic water-soluble polymer, and a water-dispersible polymer.

9. The aerogel composition as claimed in any one of the preceding claims, wherein the binder is included so as to account for a range of about 0.5 wt% to 20 wt% based on a total amount of solids in the aerogel composition.

10. The aerogel composition as claimed in any one of the preceding claims, wherein the dispersant comprises at least one of a surfactant and a phosphate-based salt.

11. The aerogel composition as claimed in any one of the preceding claims, wherein the dispersant is included so as to account for a range of about 0.1 wt% to 6 wt% based on a total amount of solids in the aerogel composition.

12. The aerogel composition as claimed in any one of the preceding claims, wherein a weight ratio of the solvent to a total amount of solids in the aerogel composition is in a range of about 1:1 to 1:90.

13. The aerogel composition as claimed in any one of the preceding claims, wherein the reinforcement material is included so as to account for a range of about 5 wt% to 70 wt%, the aerogel is included so as to account for a range of about 10 wt% to 90 wt%, and the functional material is included so as to account for a range of about 0.5 wt% to 20 wt%, based on a total amount of solids in the aerogel composition.

14. A method of manufacturing an aerogel composition for battery insulation sheets, the method comprising:
mixing a solvent with a functional material that includes at least one of a binder and a dispersant to manufacture a solvent mixture;
mixing the solvent mixture with an aerogel to manufacture an aerogel mixture; and
mixing the aerogel mixture with a reinforcement material to manufacture an aerogel composition, wherein
the reinforcement material includes a first fibrous support (121) and a second fibrous support (122), and
the first fibrous support (121) and the second fibrous support (122) include ingredients that are different from each other.

15. A battery insulation sheet comprising:
a first substrate (110);
a second substrate (130); and
an aerogel layer (120) between the first substrate (110) and the second substrate (130), wherein
the aerogel layer (120) includes the aerogel composition as claimed in any one of claims 1 to 13.
